(19) Europäisches Patentamt
European Patent Office
Office européen des brevets

(11) Publication number : **0 611 734 A1**

(12) **EUROPEAN PATENT APPLICATION**

(21) Application number : 94301059.5

(22) Date of filing : 14.02.94

(51) Int. Cl.$^5$ : **C04B 24/16**, C04B 28/14

(30) Priority : 16.02.93 JP 48795/93

(43) Date of publication of application :
24.08.94 Bulletin 94/34

(84) Designated Contracting States :
**DE FR GB**

(71) Applicant : **TOHO CHEMICAL INDUSTRY CO., LTD.**
**1-2-5, Ningyocho,**
**Nihonbashi,**
**Chuo-ku**
**Tokyo 103 (JP)**

(71) Applicant : **YOSHINO GYPSUM CO., LTD.**
**3-1, Marunouchi 3-chome**
**Chiyoda-ku**
**Tokyo (JP)**

(72) Inventor : **Tanaka, Akira**
**3-21-4, Matsuyama**
**Kiyose-shi, Tokyo (JP)**
Inventor : **Nakamura, Yoshinobu**
**1-16-3, Sakigaoka**
**Funabashi-shi, Chiba-ken (JP)**
Inventor : **Matsumaru, Kouji**
**6-12-20-404, Honcho**
**Funabashi-shi, Chiba-ken (JP)**
Inventor : **Kishibayashi, Tetsuo**
**3-9-22, Maechi**
**Urawa-shi, Saitama-ken (JP)**
Inventor : **Miura, Satoru**
**4-17-21, Ohsawa**
**Koshigaya-shi, Saitama-ken (JP)**
Inventor : **Isoda, Hiroshi**
**2200-3, Kubota**
**Sodegaura-shi, Chiba-ken (JP)**

(74) Representative : **McCallum, William Potter et al**
**Cruikshank & Fairweather**
**19 Royal Exchange Square**
**Glasgow G1 3AE Scotland (GB)**

(54) **Foaming agent for light-weight gypsum plaster boards.**

(57) A foaming agent for light-weight gypsum plaster boards comprises a mixture of compounds of the general formula :

$$RO(CH_2 CH_2 O)_n SO_3 M$$

wherein R comprises 10 to 50 weight % of an alkyl group having 8 carbon atoms, 20 to 60 weight % of an alkyl group having 10 carbon atoms, the total amount of the alkyl groups having 8 and 10 carbon atoms being 40 to 85 weight %, 10 to 40 weight % of an alkyl group having 12 carbon atoms, and 0 to 15 weight % of other alkyl groups such as those having 11, 13 or 14 carbon atoms, n represents a number of 0.5 to 1.0 on average and M represents a monovalent alkali metal, ammonium or alkanolammonium. The foaming agent provides uniform and long-lasting foams suitable for the production of light-weight gypsum plaster boards.

EP 0 611 734 A1

The present invention relates to a foaming agent used for the production of light-weight gypsum plaster boards. In particular, the present invention relates to a foaming agent capable of forming stable, uniform foams and thereby suitable for the production of light-weight gypsum plaster boards.

Gypsum plaster boards are usually produced by pouring a calcined gypsum slurry between an upper base paper and a lower base paper, passing the resultant product through a shaping apparatus to continuously shape it into a plate having a predetermined width and thickness, curing the plate, roughly cutting it, drying the obtained pieces and cutting them into a predetermined size of the final product; the calcined gypsum slurry being obtained by mixing a calcined gypsum (obtained by calcining a natural gypsum and/or chemical gypsum), an adhesion assistant, a curing accelerator, foams and other additives with water. The foams used are obtained by dissolving a foaming agent in water, feeding the resultant solution into a foaming apparatus and mixing the solution with air under suitable conditions. It is usually understood that when relatively large spherical foams are evenly dispersed in the cured gypsum (core) containing the additives, the light-weight gypsum plaster boards having a high adhesion between the core and the base papers and a high core strength are obtained.

Therefore, it has been demanded to develop a foaming agent capable of forming long-lasting stable foams satisfying the above-described requirements. The best foaming agents for the production of the light-weight gypsum plaster boards have been sulfates of higher alcohols or of ethylene oxide adducts of the higher alcohols in the prior art. Varieties of the most suitable alcohol compounds of these kinds and addition molar numbers of ethylene oxide were proposed.

For example, U.S. Patent No. 4,156,615 proposes sodium or ammonium salts of sulfated ethylene oxide (1.5 to 2.5 mol) adducts of higher alcohols comprising at least 90 % of those having 8 to 10 carbon atoms. Japanese Patent Unexamined Published Application (hereinafter referred to as "J.P. KOKAI") No. Hei 4-505601 proposes sulfuric ester salts (sodium or ammonium salts) of ethylene oxide (0.4 to 1.3 mol) adducts of the same higher alcohols as those described above. J.P. KOKAI No. Hei 3-23508 proposes sulfuric ester salts (sodium or ammonium salts) of ethylene oxide (1 to 3.5 mol) adducts of mixtures of (1) higher alcohols having 8 to 10 carbon atoms in which the ratio of the higher alcohol having 8 carbon atoms to that having 10 carbon atoms is about 1:1 and (2) higher alcohols having 12 to 14 carbon atoms in which the ratio of the higher alcohol having 12 carbon atoms to that having 14 carbon atoms is about 3:1 to 1:3, the ratio of (1) to (2) being 2:1 to 8:1.

However, all of these proposals have defects. Namely, the stability of the foams is unsatisfactory in U.S. Patent No. 4,156,615; although the foams obtained in J.P. KOKAI No. Hei 4-505601 are more stable than those obtained in U.S. Patent No. 4,156,615, the concentration of the solution of the foaming agent in the former must be considerably higher than that in the latter; and although a high foaming capacity can be obtained in a relatively low concentration in J.P. KOKAI Hei 3-23508, the stability of the foams is yet insufficient and lower than that of the foams obtained with the compounds of J.P. KOKAI No. Hei 4-505601.

Summary of the invention

A primary object of the present invention is to provide a foaming agent used for the production of the light-weight gypsum plaster boards which makes it possible to overcome the defects of the current foaming agents used for the production of the light-weight gypsum plaster boards.

Another object of the present invention is to provide a foaming agent used for the production of the light-weight gypsum plaster boards which is capable of forming stable and uniform foams suitable for the production of light-weight gypsum plaster boards.

Another object of the present invention is to provide a foaming agent used for the production of the light-weight gypsum plaster boards which results in good adhesion rate between the resulting light-weight gypsum plaster boards and upper base paper or lower base paper, and also good strength of light-weight gypsum plaster boards.

These and other objects of the present invention will be apparent from the following description and examples.

In accordance with the present invention, there is provided a foaming agent for light-weight gypsum plaster boards, which comprises a mixture of compounds of the general formula:

$$RO(CH_2CH_2O)_n SO_3M$$

wherein R comprises 10 to 50 weight % of an alkyl group having 8 carbon atoms, 20 to 60 weight % of an alkyl group having 10 carbon atoms, the total amount of the alkyl groups having 8 and 10 carbon atoms being 40 to 85 weight %, 10 to 40 weight % of an alkyl group having 12 carbon atoms, and 0 to 15 weight % of other alkyl groups such as those having 11, 13 or 14 carbon atoms, n represents a number of 0.5 to 1.0 on average and M represents a monovalent alkali metal, ammonium or alkanolamine.

According to a further aspect of the present invention, there is provided a gypsum plaster board incorporating a foaming agent as set out in the preceding paragraph.

As the alkyl groups composed of R in the foregoing general formula, an amount of alkyl group having 8 carbon atoms is preferably 20 to 40 wt %, more preferably, 20 to 30 wt %. An amount of alkyl group having 10 carbon atoms is preferably 30 to 60 wt %, more preferably, 40 to 55 wt %. The total amount of the alkyl groups having 8 and 10 carbon atoms is preferably 40 to 75 wt %, more preferably, 45 to 75 wt %. An amount of alkyl group having 12 carbon atoms is preferably 15 to 40 wt %, more preferably, 15 to 30 wt %. An amount of alkyl groups other than those having 8, 10 and 12 carbon atoms is preferably 0 to 10 wt %, more preferably, 0.1 to 8 wt %.

Examples of the monovalent alkali metal include sodium, potassium and the like, and examples of alkanolamine include monoethanolamine, diethanolamine and triethanolamine. In this connection, alkali metal, ammonium and triethanolamine are preferable as M.

The foaming agents of the present invention are easily obtained by blending higher alcohols having 8, 10 and 12 carbon atoms in a predetermined rate, adding 0.5 to 1.0 mol of ethylene oxide to them, sulfating the resultant adduct with a known sulfating agent such as chlorosulfonic acid or sulfer trioxide, and neutralizing the resultant compound with sodium hydroxide, ammonia, triethanolamine, diethanolamine or the like. A higher alcohol having 11, 13 or 14 carbon atoms may be contained therein in an amount of 15 weight % or below. The higher alcohols used are preferably natural, linear ones. The resultant itself may be used as an aqueous solution. In this respects, it is preferable that the solution comprises 20 to 55 wt % of the foaming agent as solid content and a balance of water. The solution may further contain a water-soluble solvent such as ethyl alcohol, isopropyl alcohol, butyl alcohol, ethylene glycol monomethyl ether, ethylene glycol monoethyl ether, ethylene glycol monobutyl ether, diethylene glycol monobutyl ether or hexylene glycol in an amount of 0.1 to 5 parts weight per part of the alkyl ether sulfate so as to improve the low-temperature resistance and the quality of the foams. The foaming agents of the present invention thus obtained and to be used for the production of the light-weight gypsum plaster boards are free from the defects of known foaming agents used for the production of the light-weight gypsum plaster boards, and when they are used in even a relatively small amount, stable and uniform foams are formed, which greatly contributes to the production of the light-weight gypsum plaster boards.

The foaming agent of the present invention can be added to calcined gypsum slurry in an appropriate amount, for example, 0.005 to 0.2 wt % (as a solid matter), preferably 0.02 to 0.05 wt % relative to 100 parts by weight of solid contant of the calcined gypsum slurry.

The present invention will be illustrated with the following examples.

Example 1

200 g of Kalcol 08H (a product of Kao Corporation), 250 g of Conol 20P (a product of New Japan Chemical Co., Ltd.) and 550 g of Conol 10DS were mixed together. The composition of the mixture was analyzed from a gas chromatogram thereof to find that it comprised 19.1 wt % of $C_8$ alcohol, 54.2 wt % of $C_{10}$ alcohol, 24.6 wt % of $C_{12}$ alcohol, 1.8 wt % of $C_{13}$ or $C_{14}$ alcohol and 0.3 wt % of others.

1 mol (160.5 g) (from OHV) of the alcohol mixture was fed into an autoclave. 0.2 g of sodium hydroxide was added thereto. After the dehydration, 0.7 mol of ethylene oxide was added to the product at 150 to 160 °C in nitrogen gas atmosphere. Then the catalyst was neutralized with sulfuric acid. After the dehydration, 1 mol (191 g) (from OHV) of the ethylene oxide adduct was fed into a four-necked flask. 1 mol (116.5 g) of chlorosulfonic acid was added dropwise thereto at a temperature of 40 °C or below for 3 hours and then the dehydrochlorination was conducted for 2 hours. The reaction mixture was added to 403 g of 10 wt % sodium hydroxide solution, and the resultant mixture was neutralized so that the pH of the solution having a solid content of 1 wt % would be 7.8. Water was added to the mixture to control the solid content at 35 wt % and thereby to obtain the product of Example 1, which was tested as will be described below.

Examples 2 to 5

The products of Examples 2 to 5 were synthesized in the same manner as that of Example 1. The solid content was 35 wt % in all the products.

The products were tested as will be described below.

Table 1  Synthesis in Examples 2 to 5

| Ex. | Carbon number of starting alcohol (wt%) | Mol number of added EO | Sulfating agent | Salt |
|---|---|---|---|---|
| 2 | $C_8$: 25.1, $C_{10}$: 40.5 $C_{12}$: 27.2, $C_{14}$: 7.0, others: 0.2 | 0.8 | Chlorosulfonic acid | Na |
| 3 | $C_8$: 28.1, $C_{10}$: 45.3 $C_{12}$: 19.2, $C_{14}$: 6.5, others: 0.9 | 0.9 | Chlorosulfonic acid | Na |
| 4 | $C_8$: 20.5, $C_{10}$: 45.1 $C_{12}$: 29.5, others: 4.9 | 0.55 | Chlorosulfonic acid | $NH_4$ |
| 5 | $C_8$: 20.5, $C_{10}$: 45.1 $C_{12}$: 29.5, others: 4.9 | 0.7 | Anhydrous sulfuric acid | TEA *1 |

*1:  triethanolamine

Comparative Examples 1 to 3

The products of Comparative Examples 1 to 3 were synthesized in the same manner as that of Example 1 and as given in Table 2. The solid content was 35 wt % in all the products.

The products were tested as will be described below.

Table 2

| Synthesis in Comparative Examples 1 to 3 | | | | |
|---|---|---|---|---|
| Comp. Ex. | Carbon number of starting alcohol (wt %) | Mol number of added EO | Sulfating agent | Salt |
| 1 | $C_8$: 46.4, $C_{10}$: 46.5 $C_{12}$: 2.2, others: 4.9 | 2.0 | Chorosulfonic acid | Na |
| 2 | $C_8$: 46.4, $C_{10}$: 46.5 $C_{12}$: 2.2, others: 4.9 | 0.8 | Chlorosulfonic acid | Na |
| 3 | $C_8$: 34.5, $C_{10}$: 35.1 $C_{12}$: 14.5, $C_{14}$: 13.8, others: 2.1 | 2.0 | Chlorosulfonic acid | $NH_4$ |

Foaming test

The foaming tests of the products obtained in Examples 1 to 5 and Comparative Examples 1 to 3 were conducted under the conditions as will be described below to obtain the results given in Table 3. Foaming test method:

2.14 g of each of the products obtained in Examples 1 to 5 and Comparative Examples 1 to 3 was exactly weighed and fed into a 300 ml beaker. It was diluted with 300 g of a saturated aqueous gypsum solution prepared separately to control the solid content at 0.25 wt %. 200 ml of the resultant diluted foaming agent solution was taken in a graduated cylinder, then gently transferred into a graduated 2 $\ell$ mixer and stirred with stirring blades at 12,000 rpm for 10 sec to form foams. Immediately after the stirring was stopped, the volume of the foams in the mixer was read to obtain data for the comparison of the foaming power.

The period ranging from the stopping of the stirring to the time at which the volume of the liquid discharged from the foams had reached 100 ml was determined as a half-life period for comparison of the stability of the foams. The saturated aqueous gypsum solution was prepared by adding 5 wt % of calcined gypsum to distilled water, stirring the resultant mixture for 30 min, leaving the mixture to stand at ambient temperature for 15 hours, and filtering the supernatant liquid.

The same test as that described above was repeated except that the solid content of the foaming agent was altered to 0.15 wt % or 0.35 wt %.

Table 3  Results of foaming test

| | 0.15 % *1 | | 0.25 % *1 | | 0.35 % *1 | |
| | Vol. | Half-life | Vol. | Half-life | Vol. | Half-life |
| | (ml) | (sec) | (ml) | (sec) | (ml) | (sec) |
|---|---|---|---|---|---|---|
| Example | | | | | | |
| 1 | 920 | 238 | 1200 | 295 | 1310 | 338 |
| 2 | 850 | 235 | 1090 | 289 | 1200 | 327 |
| 3 | 860 | 232 | 1140 | 292 | 1260 | 332 |
| 4 | 880 | 234 | 1180 | 298 | 1280 | 334 |
| 5 | 860 | 236 | 1120 | 285 | 1220 | 320 |
| Comp. Ex. | | | | | | |
| 1 | 790 | 227 | 1000 | 268 | 1120 | 302 |
| 2 | 800 | 228 | 1020 | 271 | 1220 | 312 |
| 3 | 850 | 231 | 1060 | 279 | 1150 | 306 |

Note: *1 means concentration (wt %) of foaming agent

The products obtained in Examples 1 to 5 of the present invention exhibited more excellent foaming properties and foam-maintaining properties than those obtained in Comparative Examples 1 to 3 as the foaming agents for the production of light-weight gypsum plaster boards.

Example 6

This Example will illustrate the production of the gypsum plaster boards with the above-described foaming agent.

Foams were introduced into a mixture of 54.9 wt % of calcined gypsum, 0.5 wt % of oxidized starch, 0.2 wt % of a water-reducing agent, 0.5 wt % of potassium sulfate (curing accelerator) and 43.9 wt % of water, and then the resultant mixture was kneaded to obtain the gypsum slurry. The slurry was poured between an upper base paper and a lower base paper, and the obtained product was passed through a shaping apparatus to continuously shape it into a plate having a width of 910 mm and a thickness of 12 mm. After curing the gyprum, the plate was roughly cut into pieces having a length of 1835 mm, which were dried and cut into a length of 1810 mm to obtain the intended gypsum plaster boards.

The foaming in this step was conducted by using the foaming agent (hereinafter referred to as "foaming agent A") described in Example 1 and that (hereinafter referred to as "foaming agent B") described in Comparative Example 1 under the same foaming conditions.

Table 4 shows the results of the determination of the adhesion rate and core strength of each of the gypsum plaster boards having various densities obtained by controlling the volume of the plaster slurry by varying the quantity of the foams while the ratio of water to the calcined gypsum was kept constant.

6

Table 4

| Foaming agent | Quantity of foaming agent | Density of sypsum plaster board | Adhesion (upper/lower base paper) | Core strength |
|---|---|---|---|---|
| | $(g/m^2)$ | $(T/m^3)$ | (wt %) | (N) |
| A | 6.2 | 0.752 | 100/100 | 206 |
| A | 6.5 | 0.705 | 100/100 | 200 |
| A | 6.9 | 0.630 | 100/100 | 198 |
| A | 7.2 | 0.610 | 100/100 | 190 |
| B | 6.9 | 0.746 | 100/100 | 188 |
| B | 7.1 | 0.726 | 43/21 | 164 |
| B | 7.2 | 0.701 | 0/0 | 135 |
| B | 7.5 | 0.684 | 0/0 | 105 |

Note: The term "adhesion" indicates the rate of the area in which the core was not exposed when the upper or lower base paper was peeled from the gypsum core. The peeling test was conducted according to JIS A 6901-1983.

The core strength was determined according to ASTM C 473-92.

It will be apparent from Table 4 that the properties of the foaming agent A for the production of the gypsum plaster boards were superior to those of the foaming agent B. In particular, the adhesion between the base paper and the gypsum core was high even when the density was 0.610 in case the foaming A was used, while the adhesion was impossible when the density was 0.750 or below and the intended product could not be obtained in case the foaming B was used. The core strength in the gypsum plaster boards having various densities produced with the foaming agent A was sufficiently kept.

It will be apparent, therefore, that the foaming agent of the present invention greatly contributes to the production of the lightweight gypsum plaster boards.

When the foaming agent of the present invention is used for the production of the gypsum plaster boards, the defects of the known, ordinary foaming agents are overcome, and stable foams are formed to bring about excellent results in the production of the light-weight gypsum plaster boards.

## Claims

1. A foaming agent for light-weight gypsum plaster boards, which comprises a mixture of compounds of the

general formula:

$$RO(CH_2CH_2O)_n SO_3M$$

wherein R comprises 10 to 50 weight % of an alkyl group having 8 carbon atoms, 20 to 60 weight % of an alkyl group having 10 carbon atoms, the total amount of the alkyl groups having 8 and 10 carbon atoms being 40 to 85 weight %, 10 to 40 weight % of an alkyl group having 12 carbon atoms, and 0 to 15 weight % of other alkyl groups such as those having 11, 13 or 14 carbon atoms, n represents a number of 0.5 to 1.0 on average and M represents a monovalent alkali metal, ammonium or alkanolamine.

2. A foaming agent of claim 1 wherein the amount of alkyl group having 8 carbon atoms is 20 to 40 wt %.

3. A foaming agent of claim 1 or 2 wherein the amount of alkyl group having 10 carbon atoms is 30 to 60 wt %.

4. A foaming agent as claimed in any of claims 1 to 3 wherein the total amount of alkyl group having 8 and 10 carbon atoms is 40 to 75 wt %.

5. A foaming agent as claimed in any preceding claim wherein the amount of alkyl group having 12 carbon atoms is 15 to 40 wt %.

6. A foaming agent as claimed in claim 1 wherein the amount of alkyl group having 8 carbon atoms is 20 to 40 wt %, the amount of alkyl group having 10 carbon atoms is 30 to 60 wt %, the total amount of alkyl groups having 8 and 10 carbon atoms is 40 to 75 wt %, the amount of alkyl group having 12 carbon atoms is 15 to 40 wt %, and the amount of alkyl groups other than those having 8, 10 and 12 carbon atoms is preferably 0 to 10 wt %.

7. A foaming agent as claimed in claim 1 wherein the amount of alkyl group having 8 carbon atoms is 20 to 30 wt %, the amount of alkyl group having 10 carbon atoms is 40 to 55 wt %, the total amount of alkyl groups having 8 and 10 carbon atoms is 45 to 75 wt %, the amount of alkyl group having 12 carbon atoms is 15 to 30 wt %, and the amount of alkyl groups other than those having 8, 10 and 12 carbon atoms is preferably 0.1 to 8 wt %.

8. A gypsum plaster board incorporating a foaming agent as claimed in any preceding claim.

European Patent Office

**EUROPEAN SEARCH REPORT**

Application Number

EP 94 30 1059

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-5 158 612 (A. SAVOLY ET AL) <br> * claims; example 1 * <br> --- | 1-8 | C04B24/16 <br> C04B28/14 |
| A | EP-A-0 336 749 (STEPAN CANADA INC) <br> * the whole document * <br> --- | 1-8 | |
| A <br> D | US-A-4 618 370 (H.A. GREEN ET AL) <br> * claims * <br> & JP-B-03 023 508 (...) <br> --- | 1-8 | |
| A <br> D | US-A-4 676 835 (H.A. GREEN ET AL) <br> * claims * <br> & JP-B-03 023 508 (...) <br> --- | 1-8 | |
| A <br> D | US-A-4 678 515 (H.A. GREEN ET AL) <br> * claims * <br> & JP-B-03 023 508 (...) <br> --- | 1-8 | |
| D,A | US-A-4 156 615 (S. CUKIER) <br> * claims * <br> --- | 1-8 | TECHNICAL FIELDS SEARCHED (Int.Cl.5) <br><br> C04B |
| A | CHEMICAL ABSTRACTS, vol. 73, no. 6, <br> 10 August 1970, Columbus, Ohio, US; <br> abstract no. 28510x, <br> page 213 ; <br> * abstract * <br> & JP-A-45 007 198 (KAO SOAP CO LTD) 12 March 1970 <br> --- | 1-8 | |
| A | CHEMICAL ABSTRACTS, vol. 73, no. 6, <br> 10 August 1970, Columbus, Ohio, US; <br> abstract no. 28512z, <br> page 213 ; <br> * abstract * <br> & JP-A-45 007 197 (KAO SOAP CO LTD) 12 March 1970 <br> --- | 1-8 | |

-/--

The present search report has been drawn up for all claims

| Place of search | Date of completion of the search | Examiner |
|---|---|---|
| BERLIN | 1 June 1994 | Kuehne, H-C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 94 30 1059

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | WO-A-90 09495 (R. BRUCE)<br>* page 14, line 1 - page 15, line 16 *<br>* claim 16 * | 1-8 | |
| D | & JP-T-4 505 601 (...) | | |

TECHNICAL FIELDS
SEARCHED     (Int.Cl.5)

The present search report has been drawn up for all claims

| Place of search | Date of completion of the search | Examiner |
|---|---|---|
| BERLIN | 1 June 1994 | Kuehne, H-C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)